# EUROPÄISCHE PATENTSCHRIFT

(11) **EP 0 983 135 B1**
(45) Veröffentlichungstag und Bekanntmachung des Hinweises auf die Patenterteilung: **26.06.2002**
(21) Anmeldenummer: 98924200.3
(22) Anmeldetag: 24.04.1998
(51) Int. Cl.: B29C 43/22, B32B 31/00, B29C 59/04, B29C 59/02, B29C 35/10, B29D 11/00

(54) **VERFAHREN UND VORRICHTUNG ZUM HERSTELLEN EINES FILMS ODER EINER SCHICHT MIT BEIDSEITIGER OBERFLÄCHENSTRUKTUR**
METHOD AND DEVICE FOR PRODUCING A FILM OR A COATING WITH A TWO-SIDED SURFACE STRUCTURE
PROCEDE ET DISPOSITIF POUR PRODUIRE UN FILM OU UNE COUCHE A STRUCTURE DE SURFACE SUR LES DEUX FACES

(30) Priorität: 21.05.1997 DE 19721170
(43) Veröffentlichungstag der Anmeldung: 08.03.2000
(73) Patentinhaber: EMTEC Magnetics GmbH (HRB 3925), 67059 Ludwigshafen (DE)
(72) Erfinder: PRIX, Volker, D-83313 Siegsdorf (DE); NENTWICH, Reinhold, D-86911 Diessen (DE)
(86) Internationale Anmeldenummer: EP9802445
(87) Internationale Veröffentlichungsnummer: WO9852733

(56) Entgegenhaltungen:
- EP-A- 0 158 085
- WO-A-93/23244
- US-A- 3 374 303
- US-A- 3 551 544
- US-A- 3 917 772
- US-A- 4 414 316
- US-A- 4 420 502
- US-A- 4 836 874

## Beschreibung

Die Erfindung betrifft ein Verfahren zum Herstellen eines Films oder einer Schicht mit einer wenigstens einerseitigen Oberflächenstruktur auf einer Basisfolie und einem dazu registergenauen anderseitigen strukturellen oder flächigen Muster, die über eine erste Walze und eine mit einer Umfangsstruktur versehene zweite Walze hergestellt sind, wobei die Walzen zur etwa gleich schnellen, aber gegensinnigen Drehung angetrieben werden und der Film oder die Schicht durch Auftragen einer Schicht aus thermoplastischem Kunststoff auf eine über die erste Walze der zweiten Walze zugeführte Folie und durch Bestrahlen zum Härten der am Umfang der zweiten Walze anliegenden Kunststoffschicht durch die Basisfolie hindurch hergestellt ist, sowie eine geeignete Vorrichtung dafür.

Mit der EP-PS 655 032 der Anmelderin ist es bekannt geworden, einen Anti-Kopierfilm aus transparentem Material und linien- oder streifenförmigen Abdeckungen in definiert versetzter Anordnung auf beiden Oberflächen des Films drucktechnisch und/oder fototechnisch durch Auftragen einer fotosensitiven Schicht, insbesondere einer Fotoresistschicht, auf einer Filmseite, (UV-)Belichten durch eine Maske und Entwickeln und anschließendes Auftragen einer weiteren fotosensitiven Schicht auf die andere Filmseite, (UV-)Belichten durch eine Maske und Entwickeln herzustellen. Eine besonders gute Registrierung der Linien- oder Streifen-Abdeckungen wird dabei erreicht, wenn die zweite fotosensitive Schicht durch die erste, bereits entwickelte Schicht hindurch belichtet wird.

Aus der US-PS 3,241,429 sind auch 3-dimensionale Panorama-Bilder bekannt, die mit Papier als Basis-Film versehen sind oder direkt aus einer Kunststoff-Linsenschicht bestehen, wobei entweder auf das Papier oder auf die Rückseite der Linsenschicht eine Bildschicht aufgedruckt ist. Um eine Registrierung der Linsen mit dem Aufdruck auf der Rückseite zu erhalten , werden Einschnitte oder Stanzöffnungen im Film verwendet, mit Hilfe derer der Druckvorgang im Register erfolgt.

Aus der US-PS 4,420,502 ist eine Vorrichtung zum Herstellen eines Films mit vorbestimmter, fein definierter Oberflächenstruktur auf einer Seite bekannt, wobei eine erste glattflächige Zylinderwalze und eine zweite Zylinderwalze mit strukturiertem Umfang angetrieben und in den Spalt dazwischen ein fließfähiges, nicht gehärtetes thermohärtbares Harzmaterial sowie eine transparente Folie eingeführt werden, und wobei durch anschließendes UV-Härten ein Film- oder eine Schicht mit definierter Struktur auf der Folie erhalten wird. Das UV-Härten erfolgt durch die Folie hindurch direkt an der zweiten Walze.

Es ergibt sich eine Ein-Schicht-Strukturfolie, die besonders für 3-D-Bildzwecke einsetzbar ist, wie auch aus der im folgenden beschriebenen US-PS 4,414,316 bekannt ist. Darin besteht ein flexibler, zusammengesetzter Film mit Linsenform-Oberfläche bekannterweise aus einem Basis-Film und einer transparenten, thermohärtbaren Schicht, die Linsenformen aufweist, wobei die Fokusebene der Linsenformen im wesentlichen an der Rückseite des Basis-Films liegt. Die thermohärtbare Schicht besteht aus einem thermohärtbaren Kunststoff, der mittels UV-Licht gehärtet ist. Der bekannte Film ist dazu bestimmt, 3-dimensionale Darstellungen oder Fotografien herzustellen, indem der Film auf stereografische Druckbilder auflaminiert wird.

Ein einseitig strukturierter Film ist auch aus der WO 94/01288 bekannt. Darin sind einseitig Zylinderlinsen vorgesehen und auf der Rückseite können Abdeckungsstreifen durch Drucken hergestellt sein, ohne daß jedoch eine technische Lehre zum Erreichen einer festen Zuordnung der Linsen zu der Lage der Abdeckungsstreifen angegeben ist. Ein Film für Antikopierzwecke ist nach dieser Schrift nicht herstellbar.

Es ist daher Aufgabe der vorliegenden Erfindung, Verfahren und Vorrichtungen anzugeben, die ermöglichen, zweiseitig registergenau strukturierte Filme oder Schichten wirtschaftlich herzustellen.

Die Verfahrensmerkmale der Lösung der vorliegenden Erfindung gehen aus Anspruch 1 hervor.

Dabei ist es überraschend möglich, nach dem Härten der einerseitigen Oberflächenstrukturschicht der Basisfolie die andere Seite der Basisfolie mit einer weiteren Schicht ebenfalls mit einem strukturellen oder flächigen Muster zu versehen und dieses durch die einerseitige Oberflächenstruktur-Schicht hindurch durch Strahlungshärten zu härten und zwar während sich die einerseitige Oberflächenstruktur-Schicht noch mit der Umfangsstruktur der zweiten Walze im Eingriff befindet, so daß eine absolut registergenaue Ausbildung der Schicht an der Rückseite der Basisfolie erreicht wird, die die vorgegebene Toleranz des hergestellten Films oder der Schicht erfüllt.

Das Verfahren ist weiterhin gekennzeichnet durch einen Film oder eine Schicht, die als einerseitige Oberflächenstruktur eine Vielzahl von gleichen, parallelliegenden, langgestreckten Linsenstrukturen, insbesondere von Zylinderkalottenform, besitzt und andererseits mit dazu registergenauen einander zugeordneten Parallellinien oder -nuten oder -stegen (oder "Balken") versehen ist.

Der Film- oder die Schicht kann auch mit einer Vielzahl von parallelen Bogenform-Linsen als Oberflächenstruktur ausgebildet sein.

Die anderseitige Oberflächenstruktur kann auch durch eine Vielzahl von parallelliegenden Stegen, insbesondere von Rechteckform, ausgebildet sein.

Es ist zweckmäßig, wenn die einerseitige Linsenstruktur und die anderseitige Parallel-Linien, -Nuten oder Stege zeitlich nacheinander, insbesondere unmittelbar nacheinander, und registergenau zueinander hergestellt werden.

Vorteilhaft können die Linsen und Stege aus einem UV-härtbarem Kunststoff, insbesondere einem Acrylatharz bestehen. Es ist auch möglich, zur Herabsetzung der Transparenz den Kunststoff, insbesondere das Acrylharz, bis zu etwa 30 Gew.-% mit Pigment zu füllen.

Es ist ebenfalls vorteilhaft, die Stege mit optisch deckenden Schichten zu versehen, insbesondere zu bedrucken.

Die Zahl derartiger Deckschichten beträgt wenigstens zwei, vorzugsweise acht.

In jedem Fall sollte für Anwendungen des hergestellten Films oder der Schicht zu Anti-Kopier-Zwecken - die maximale Transparenz der Stege etwa 7 % betragen. Damit wird sichergestellt, daß die sichtwinkelabhängigen Eigenschaften des Anti-Kopier-Films realisierbar sind.

Damit die Lesbarkeit des Dokuments gewährleistet ist, ist die Breite der Stege so gewählt, daß dieselben höchstens etwa 80 % der Fläche des Films oder der Schicht bedecken und damit bei etwa senkrechter Blickrichtung undurchsichtig machen.

Die Aufgabe wird ferner mit dem Anspruch 12, der erfindungsgemäßen Vorrichtung, gelöst.

Kennzeichnend ist dabei eine der ersten beiden Walzen nachgeschaltete dritte Walze, die gleichschnell und zur zweiten Walze gegensinnig angetrieben ist und die mit einem strukturellen oder flächigen Muster am Umfang versehen ist, wobei mittels einer weiteren Auftragseinrichtung eine weitere Schicht auf die andere Seite der einerseits beschichteten und gehärteten Basisfolie aufgebracht und anschließend (anderseitig) mittels einer Strahlungsquelle gehärtet wird.

Die zweite Walze besitzt zweckmäßig als Umfangsstruktur eine Vielzahl von gleichen parallelliegenden, langgestreckten Zylinderlinsen-Nuten, insbesondere von Zylinderkalottenform. Die Nuten können im Querschnitt auch Bogenform aufweisen.

Die dritte Walze ist zweckmäßig mit einer Umfangsstruktur aus einer Vielzahl von parallelliegenden Nuten, insbesondere von Rechteckform, ausgebildet.

Die Nuten sind sehr genau und reproduzierbar hergestellt.

Die erste Walze ist zweckmäßig mit glatter Umfangsfläche hergestellt.

Praktisch ist an der ersten Walze eine Kontaktwalze vorgesehen, über die die Trägerfolie für die Herstellung eines Films oder einer Schicht dem Umfang der ersten Walze zugeführt wird.

Vorteilhaft kann die erste Walze als Leitantriebswalze für die Steuerung der Drehgeschwindigkeit der ersten und dritten Walze dienen.

Es ist praktisch günstig, wenn die zweite Walze mittels einer Verstellvorrichtung, insbesondere auf Exzenterbasis, gegenüber der ersten und dritten Walze axial verstellbar ausgebildet ist.

Ebenso kann die dritte Walze gegenüber der ersten und zweiten Walze axial verstellbar ausgebildet sein.

Die Verstellvorrichtung kann einfacherweise im wesentlichen aus einem mit der axial verstellbaren Walze verbundenen Druckelement bestehen, an dem eine Exzenterwelle befestigt ist.

Es ist weiterhin günstig, wenn die nicht jeweils axial verstellbaren Walzen mittels einer Abschwenk- oder Abziehvorrichtung gelagert sind, zur einfachen und schnellen Einfädelung der Trägerfolie.

Ein Schwenkmechanismus, gebildet aus einer Exzenterlagerung, kann dafür günstig eingesetzt werden.

Als Auftragseinrichtung für das Schichtmaterial kann ein Gießer mit einem Gießspalt verwendet werden, und eine Abhebevorrichtung für den Gießer kann ebenfalls zur Trägerfolien-Einfädelung vorgesehen sein.

Im weiteren ist es praktisch vorteilhaft, wenn Lagermittel benutzt werden, in denen zwei der ersten bis dritten Walzen gegenüber der anderen (restlichen) Walze in ihrer Parallelität zur anderen (restlichen) Walze einstellbar sind.

Vorteilhaft kann zum Antrieb jeder der drei Walzen ein Scheibenläufer-Motor mit dazwischengeschaltetem Getriebe und einer Gleichlaufregelung vorgesehen sein.

Es ist sehr günstig, wenn die Auftragseinrichtung ein Vorhanggießer ist, der ein Gehäuse mit Lichtschutzeinrichtungen besitzt, wobei letztere Elemente aus PTFE enthalten.

Es ist weiterhin sehr günstig, wenn die Auftragseinrichtung aus Feindosierelementen besteht. Diese sind Kolbengehäuse mit Dosiernadeln, die changierend den Begießbereich der Walzen abfahren.

Praktisch kann eine Spalteinstellungseinrichtung vorgesehen sein für den ersten Spalt zwischen der ersten und zweiten Walze sowie eine weitere für den zweiten Spalt zwischen der zweiten und dritten Walze.

Eine Abwickelstation für die Trägerfolie ist mit einer Tänzerwalzen-Steuerung ausgerüstet und vor der Herstellvorrichtung für den Film oder die Schicht angeordnet, um einen einstellbaren, konstanten Bandzug zu erhalten.

In Laufrichtung des Films oder der Schicht hinter der Herstellvorrichtung kann vorteilhaft eine weitere Antriebsstation mit Tänzerwalzen-Steuerung vorgesehen sein, um einen anderen geeigneten Bandzug einstellen zu können.

Es ist ferner zweckmäßig, wenn die Stege mit Deckschichten zur Erniedrigung der Transparenz versehen werden sollen, in Laufrichtung des Films oder der Schicht hinter der weiteren Antriebsstation eine Druckstation zum Bedrucken der Stege auf der Trägerfolien-Rückseite anzuordnen.

Falls gewünscht, kann zweckmäßig hinter der Druckstation noch eine Station zum Aufbringen eines Klebmittels auf den Film- oder die Schicht vorgesehen sein.

Ein Ausführungsbeispiel einer Vorrichtung nach der Erfindung ist nachfolgend anhand einer Zeichnung beschrieben.

Darin zeigen
- Figur 1: eine schematische Darstellung der Vorrichtung
- Figur 2: eine in die Schnittebene A-A' der Figur 1 einsetzbare Zusatzeinheit
- Figur 3: die 3-Walzen-Anordnung der Vorrichtung in vergrößertem Maßstab
- Figur 4: eine Verstellungsvorrichtung für die Axialverstellung der Walzen
- Figur 5: eine Abzieheinrichtung der nicht axial verstellbaren Walzen
- Figur 6: eine Abdrückschraubenvorrichtung für die Walzenverstellung in zwei Ebenen
- Figur 7: eine Exzenter-Verstellvorrichtung für den Walzenspalt
- Figur 8: einen Abschnitt eines Anti-Kopierfilms mit Zylinder-Kalotten-Linsen und zugeordneten Balken mit Deckschichten.

Eine Abwickelstation 5 besteht aus einer Folien-Vorratsrolle 6 und einem Schneid- und Klebtisch 7 zum Schneiden der Folie 9 und Ankleben eines neuen Rollenanfangs. Dahinter folgt eine Tänzerwalzensteuerung 8 zur Einstellung und Aufrechterhaltung eines bestimmten, möglichst konstanten Bandzugs in der Folie 9.

Die seitliche Ausrichtung des Laufs der Folie 9 wird mittels einer Kantensteuerung 10 vorgenommen. Danach tritt die Folie in die Film- oder Schicht-Herstellvorrichtung 11 ein, passiert eine Lichtschranke 12, wird durch die Umlenkrolle 13 umgelenkt und erreicht an einer Andruckwalze 14 den Umfang der Glattwalze 15, die einen sehr ebenen und glatten Umfang aufweist, und die die Folie 9 in den Spalt 16 führt, der zwischen der Glattwalze 15 und der Nachbarwalze 17 vorgesehen ist, wobei letztere eine Umfangsstruktur, insbesondere eine Linsenstruktur, aufweist, und die deshalb als Linsenstrukturwalze 17 bezeichnet werden soll. Von diesem Spalt 16 wird die beschichtete Folie 9, die weiterhin als Film 25 bezeichnet werden soll, um den Umfang der Linsenstrukturwalze 17 herumgeführt und gelangt in einen weiteren Spalt 18 zwischen der Linsenstrukturwalze 17 und einer Balkenstrukturwalze 19, die am Umfang eine vertiefte oder flächige Balkenstruktur aufweist. Nach dem Herumführen des Films 25 um auch diesen Walzenumfang tritt der Film 25 aus der Herstellvorrichtung heraus und über eine weitere Lichtschranke 12 in die Aufrollwickelstation 20, die wiederum eine Tänzerwalzensteuerung 8 und ein Schneid- und Klebtisch 7 enthält sowie eine Film- oder Schicht-Aufwickelrolle 21. In der Herstellvorrichtung 11 sind am Umfang der Linsenstrukturwalze 17 und der Balkenstrukturwalze 19 Strahlungsquellen 22 angeordnet.

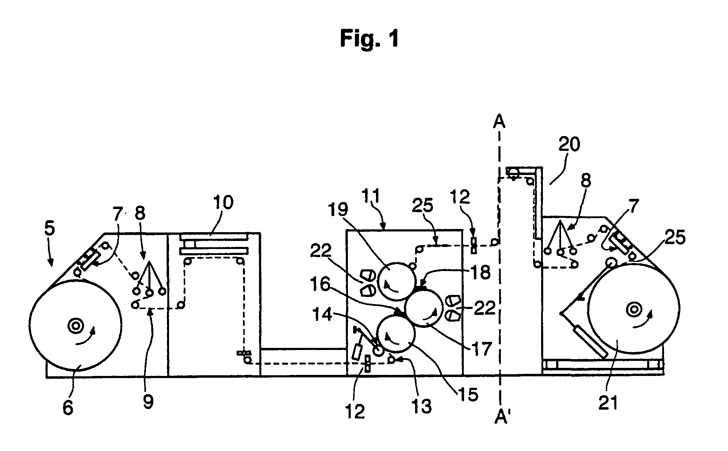

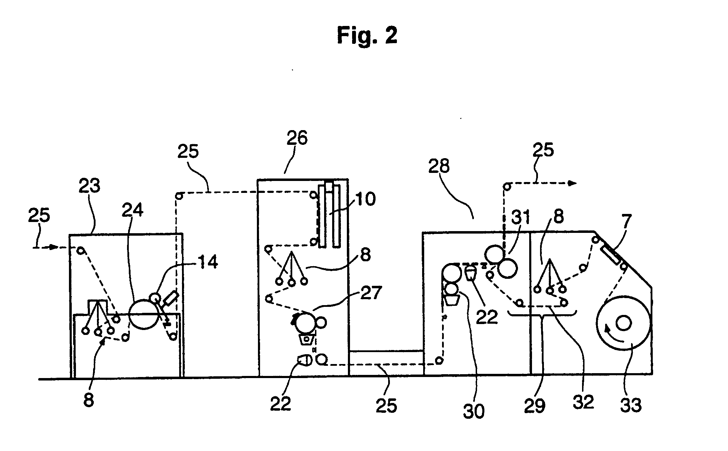

In das Vorrichtungsschema der Figur 1 kann an der Schnittebene A-A' folgende Zusatzeinheit, in Figur 2 dargestellt, eingesetzt werden.

Der von der Lichtschranke 12 ankommende Film 25 tritt in eine Antriebsstation 23, mit Tänzerwalzensteuerung 8 und einer Antriebswalze 24 mit Andruckwalze 14. Danach erreicht der Film 25 eine Druckstation 26, die außer einem Druckwerk 27 eine Strahlungsquelle 22, eine Tänzerwalzensteuerung 8 und eine Kantensteuerung 10 enthält. Danach erreicht der bedruckte Film 25 eine Klebestation 28 gegebenenfalls mit Kaschierstation 29, in der eine Abdeckfolie auf die Klebschicht des Films 25 aufgebracht wird. Die Klebstation enthält eine Klebmittel-Auftragseinheit 30 und eine Strahlungsquelle 22 und die Kaschierstation 29 eine Aufbringvorrichtung 31 für das Kaschiermaterial 32, das von einer Vorratsrolle 33 über eine Schneid- und Klebeinrichtung 7 und eine Tänzerwalzensteuerung 8 zugeführt wird.

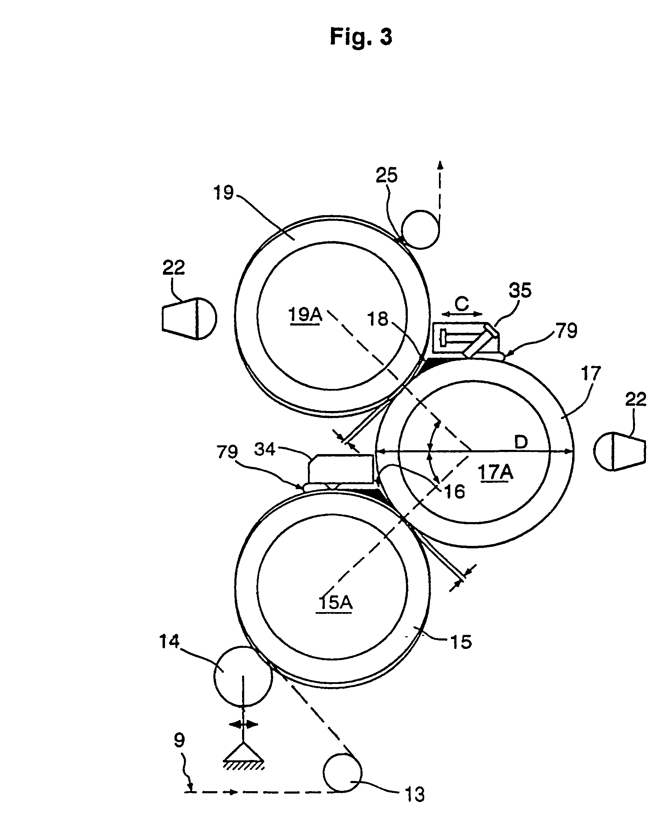

Figur 3 zeigt die Kern-Vorrichtung, nämlich die drei Walzen: Glattwalze 15, Linsenstrukturwalze 17 und Balkenstrukturwalze 19 in genauerer gegenseitiger Zuordnung. Die Walzen 15 und 19 sind gegenüber dem waagerechten Durchmesser D der Walze 17 im Winkel d von z.B. 45° angeordnet. Vor der Walze 15 sind die Umlenkwalze 13 und die Andruckwalze 14 vorgesehen, die die Folie 9 der Walze 15 zuführen. In den Spalten 16 und 18 sind Beschichtungsmaterialmengen angedeutet sowie Gießer 34 und 35, die als Auftragseinrichtungen das Material auf die Folie 9 bzw. auf den Film 25 aufbringen. Die Gießer 34, 35 sind zweckmäßig Vorhanggießer mit Lichtschutzeinrichtungen 79, z.B. aus PTFE, soweit lichthärtende Materialien Verwendung finden.

Strahlungsquellen 22 sind an den Umfängen der Walzen 17 und 19 vorgesehen.

Es ist an den Walzen 15 und 19 auch erkennbar, daß die Spalte 16 und 18 um die Beträge Δ a bzw. Δb verstellbar sind, s. die spätere Erläuterung der Spalteinstellvorrichtung. Im allgemeinen ist praktisch Δa etwa gleich Δ b und entspricht im wesentlichen der Dicke der Trägerfolie bzw. der Trägerschicht. Δ a, Δ b können auch ungleich, d.h. größer als die Foliendicke gewählt werden, um z.B. den Fokussierabstand zu vergrößern.

Es ist schematisch auch angedeutet, daß jede der Walzen 15 bis 19 auch ihren eigenen Antriebsmotor 15A, 17A und 19A besitzen. Jeder dieser Motoren 15A bis 19A ist mit einem eigenen, nicht dargestellten Getriebe ausgestattet, hat ein sehr kleines Trägheitsmoment und einen eigenen Tacho.

Alle Motoren sind über eine elektronische Gleichlaufregelung miteinander gekoppelt.

Zweckmäßig ist beim Ausführungsbeispiel die Glattwalze 15 mit Leitfunktion ausgestattet. Das heißt der Motor 15A ist das Leitantriebsorgan, das die Maschinengeschwindigkeit vorgibt und insbesondere die Geschwindigkeiten der übrigen Walzen 17 und 19.

Wichtig ist dabei auch die Tänzerwalzensteuerung 8, wobei die Tänzerwalze mit einer Pendelwalze gekoppelt ist. Im übrigen ist es zweckmäßig, die Abwickel- und Aufwickelstationen sowie gegebenenfalls die Antriebsstation 23 (nach der Filmherstellungsvorrichtung 11) an die Leitwalzensteuerung zu koppeln.

Es ist einsehbar, daß die Drehzahlanpassung der Linsenstrukturwalze 17 bzw. der Balkenstrukturwalze 19 jeweils an die Glattwalze 15 einer besonders genauen Drehzahlabstimmung bedarf, da über jede Drehzahldifferenz die Qualität des Films meist negativ beeinflußt wird.

Grundsätzlich ist eine hohe Torsionssteifigkeit zwischen Walze und zugehörigem Antriebsmotor notwendig. Durch die direkt gekoppelten Getriebe und die Tachos, die die Walzen-Ist-Drehzahl liefern, ist eine sehr genaue Gleichlaufregelung realisierbar.

Es ist z.B. möglich, die Linsenstrukturwalze 17 um 1 %o (Promille) schneller als den Leitantrieb (Walze 15, 15A) einzustellen, was eine Spannung in der Folie 9 verursacht. Es ist also ein gewünschter Bandzug zwischen den Walzen 15 bis 19 konstant einstellbar. Wenn sich z.B. der Walzenspaltabstand (a, b) (und damit der wirksame Walzendurchmesser) ändert, läßt sich dies durch eine entsprechende Anpassung der Gleichlaufregelung kompensieren.

Zur Einstellung der Walzenspalte 16 und 18 (Spaltweiten Δa und Δ b in Fig. 3) sind die Leitwalze, Glattwalze 15, und die Balkenstrukturwalze 19, z.B. über Exzenterverstellvorrichtungen aneinander an- und voneinander abschwenkbar, wie in Figur 3 angedeutet.

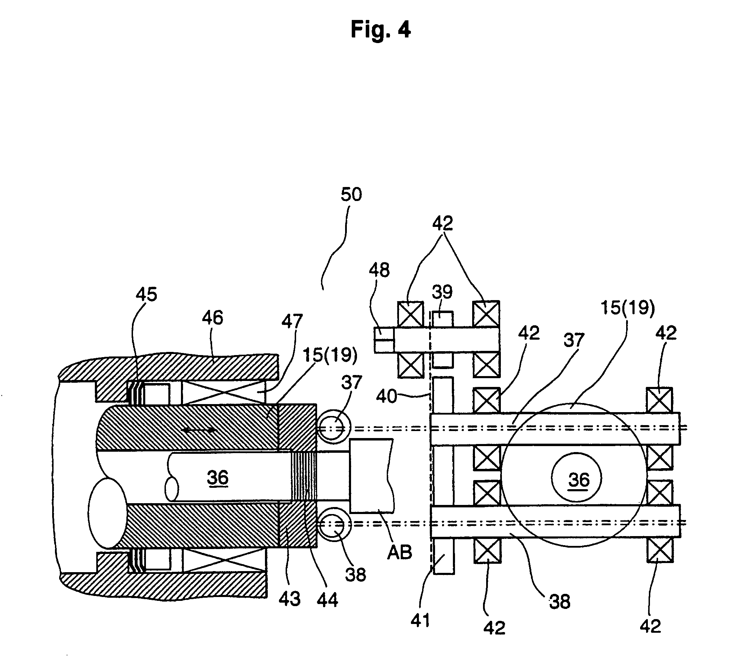

Eine geeignete Exzenterverstellvorrichtung 50 ist in Figur 4 schematisch in Querschnitt und Ansicht skizziert.

Darin bedeuten 15, 19 in Querschnitt und Ansicht die zu verstellende Walze, 36 die Achse der Walze, 37, 38 die Exzenterwellen, 39-41 eine Kombination ineinandergreifender Zahnräder, 42 diverse Lagerungen der Exzenterwellen 37, 38 und Zahnräder 39-41, AB einen Axialantrieb, 43 eine Druckplatte, 44 eine Kupplung, 45 Federelemente, 46 ein Gehäuse und 47 Axialführungselemente. Das Zahnrad 39 ist durch Schlüsselflächen 48 drehbar, wodurch die beiden Zahnräder 40 und 41 und Exzenterwellen 37, 38 synchron verdreht werden, so daß die Exzenter gegen die Druckplatte 43 drücken und diese in den Richtungen des Doppelpfeils axial verschieben. Die Vorspannung wird durch die Federelemente 45 geliefert. Es sind damit Axialverschiebungen in der Größenordnung von 0 bis 1 mm mit einer Genauigkeit von 1 - 2 µm erreichbar.

Zum Einfädeln und Reinigen kann der Spalt 16, 18 auf 8 mm geöffnet werden. Mittels nicht gezeigter Anschlagscheiben, die über Druckhülsen auf der verlängerten Walzenachse montierbar sind, ist eine exakte Wiederholgenauigkeit gewährleistet. Das An- und Abschwenken der Walzen 15 und 19 selbst kann über geeignete Pneumatikzylinder bewerkstelligt werden, die auch eine Toleranzen ausgleichende Wirkung besitzen.

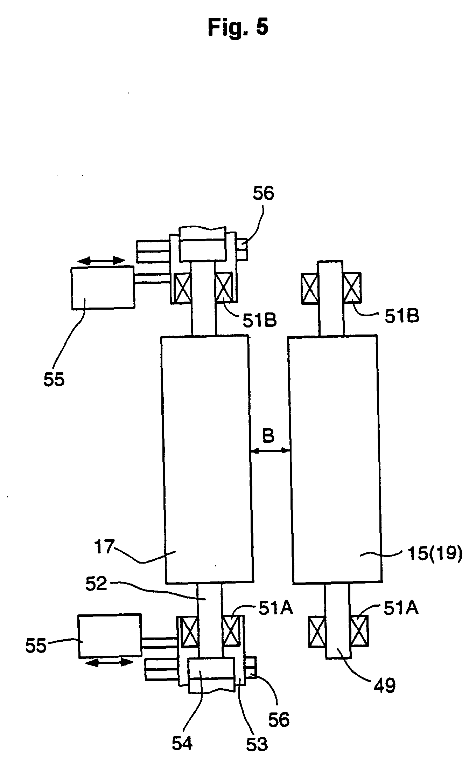

Eine alternative Verstellvorrichtung 60 ist auf Basis eines Abziehens von nicht axial verstellbaren Walzen auf einer Linearführung in Figur 5 dargestellt.

Mit 15 (19) ist die feste, also hier nicht verstellbare Walze bezeichnet. Ihre Achse 49 ist in den Drehlagern 51 A, B gehalten.

Die andere abziehbare Walze 17 ist ebenfalls mit einer Achse 52 in ebensolchen Drehlagern 51A gelagert. Ein Gehäuse 53, das außer den Drehlagern 51 A, B auch geeignete Gleit- oder Rollelemente 54 enthält, ist mit Pneumatik-Zylindern 55 verbunden. Die Gleit- oder Rollelemente 54 bewegen sich bei Betätigung der Pneumatikzylinder 55 auf Linearführungs-Schienen 56 in den Richtungen des Doppelpfeils B. Die Genauigkeit von ca. 1 - 2 µm ist auch hier erreichbar.

Die Gießer 34 und 35 sind in Figur 3 schematisch dargestellt, einmal mit äußerem Umriß (34) und einmal (35) mit einer Einstellschraube zur Einstellung der Auftragsmenge.

Der ganze Gießer 35, der sich selbstverständlich über dic ganze Breite der Folie 9 erstreckt, ist über eine nicht dargestellte, aber durch Doppelpfeile C angedeutete An- und Abschwenkeinrichtung von der Walze 17 abhebbar zum Reinigen und zum Einfädeln der Folie 9 und ist anschließend wieder anschwenkbar. Dasselbe gilt auch für den Gießer 34. Der Abstand der Gießerlippe zur Walze ist über Schrauben geeignet einstellbar.

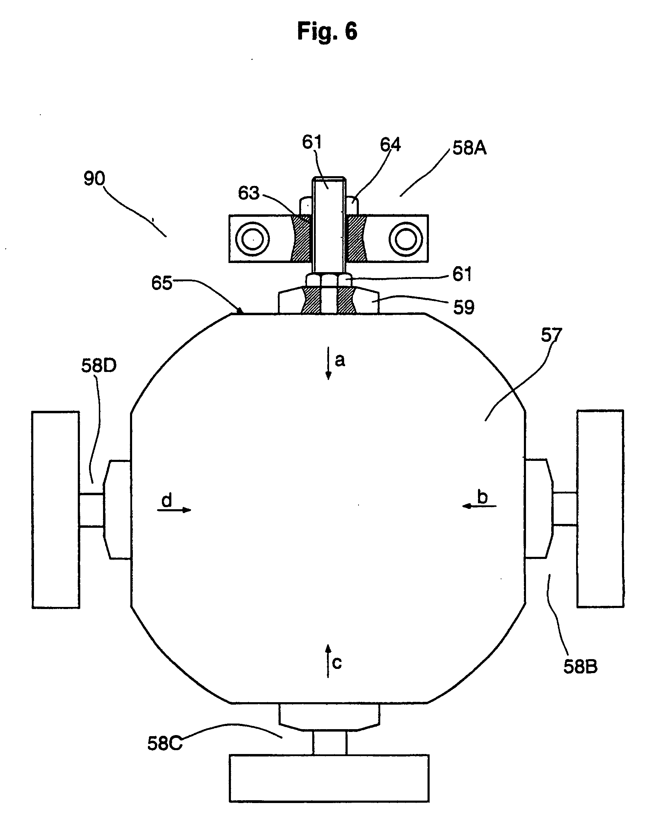

Alle drei Walzen, Glattwalze 15, Linsenstrukturwalze 17 und Balkenstrukturwalze 19 sind jeweils auf ihrer Seite, wo der Antriebsmotor 15 A, 17 A, 19 A nicht vorhanden ist, in zwei Ebenen für die Achs-Parallelität zueinander einstellbar. Die Einstellung muß im Mikrometerbereich genau vorgenommen werden - auf ca. 1 µm bis ca. 2 µm genau und ist zweckmäßig mittels folgender Feineinstellagervorrichtung 90 über Abdrückschrauben realisierbar wie in Figur 6 gezeigt.

Die Lagervorrichtung 57 ist kreuzförmig zwischen 4 Einstelleinrichtungen 58 A-D gelagert. Diese bestehen jeweils aus einem Abdrückfuß 59, einem Schraubbolzen 61, einer Halterung 62, einer Gewindebohrung 63 und einer Kontermutter 64. Dreht man den Schraubbolzen in die Gewindebohrung 63 hinein, so bewegt sich die Lagervorrichtung 57 in die Längsbewegungsrichtung, also bei der oberen Einstelleinrichtung 58 A nach unten (Pfeil a) und folglich bei 58 C nach oben, bei 58 B nach links und bei 58 D nach rechts (s. Pfeile b-d).

Der Abdrückfuß 59 drückt dabei auf den Lagersitz 65.

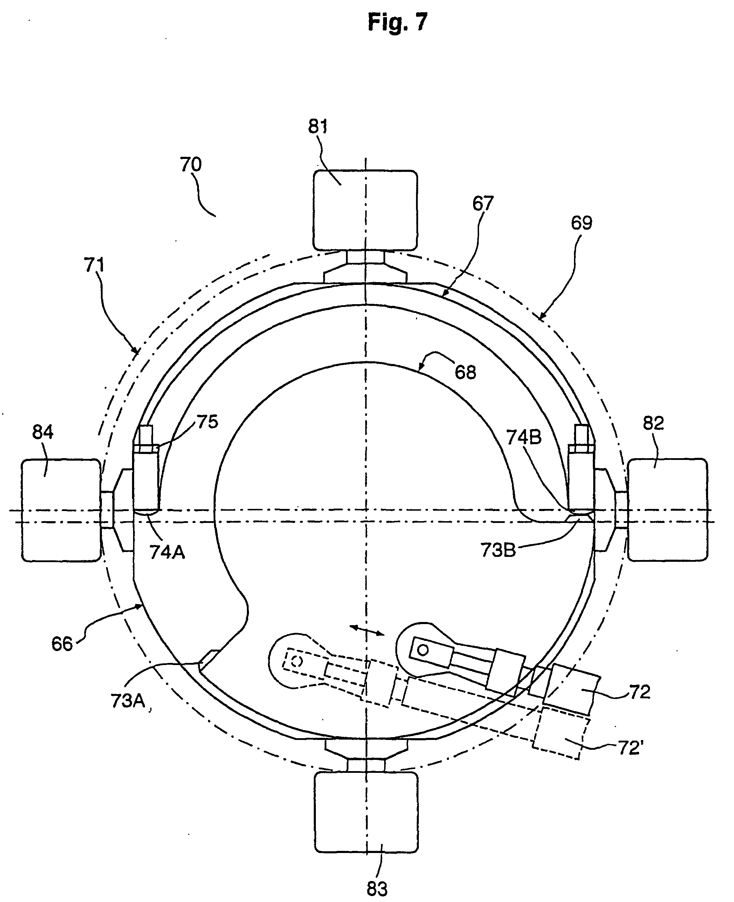

Außer einer Exzenter-Verstellvorrichtung 50 in Figur 4 ist auch eine Exzenter-Verstelleinheit 70, in Figur 7 dargestellt, verwendbar zur Einstellung der Walzenspalte 16 und 18 (Figur 1).

Die Einheit 70 besteht aus einem feststehenden Gehäuse 66 mit dem eine Druck-Hülse 67 fest verschraubt ist. Eine Scheibe 68 ist über die Druck-Hülse 67 mit der Walze 15 (19), als strichpunktierter Kreis 69 in abgeschwenkter Lage dargestellt und links oben als strichpunktiertes Kreisfragment 71 dargestellt, verbunden und mit dem Hubzylinder 72 gekoppelt.

An der Scheibe 68 sind Druckbolzen 73 A und 73 B vorhanden, die mit einstellbaren Anschlägen 74 A und 74 B zusammenwirken. Fährt der Hubzylinder 72 aus (in Richtung des gestrichelten Hubzylinders 72), dreht sich die Walze 15 (19) zusammen mit der Scheibe 68 im Uhrzeigersinn, so daß die Walze in ihre abgeschwenkte Lage (Kreissegment 71) bewegt wird und zwar so weit, bis der Druckbolzen 73 A am einstellbaren Anschlag 74 A anliegt. (Mittels der Kontermutter 75 ist die Einstellung des Anschlags 74 A, 74 B fixierbar.)

Mißt man nun auf der linken bzw. rechten Walzenseite den Spalt mittels Spions, so kann, falls Abweichungen festgestellt werden, die Spaltweite korrigiert werden, indem der Anschlag 74 A, 74 B verstellt wird. Die Lagermittel 81 bis 84 können ebenfalls als Achs-Parallelitäts-Feinsteinstelleinrichtungen, wie die Einrichtungen 58 A - 58 D in Figur 6 ausgebildet sein.

Das mit vorliegender Vorrichtung durchzuführende Verfahren besteht im wesentlichen darin, erst die Linsenstruktur zu gießen (z.B. mittels Vorhanggießverfahrens), über Thermo- oder Strahlenhärtung die Linsenstruktur auszuhärten und dann, ohne daß die Linsenstruktur die Strukturwalze (Linsenstrukturwalze 17) verlassen hat, die Rückseite des Films mit einer den Linsen senkrecht gegenüberliegenden, erhabenen oder flächigen Balkenstruktur in Registration mit der Linsenstruktur zu gießen und zu härten, insbesondere nach demselben Gieß- und Härteverfahren und insbesondere unter Verwendung derselben härtbaren Kunststoff-Materialien.

Das Gießmaterial, z.B. ein Fotoresistmaterial, z.B. ZM-2483 R der Fa. Morton International Inc., USA oder Craigcoat 1051 X der Fa. Craig Adhesives al Coatings Co., USA, wird in einem zur wenigstens einen Dosiereinrichtung verschließbaren Gießer dosiert. Eine Folie, insbesondere aus Polyethylenterephthalat (PET), läuft zwischen Glattwalze 15 und Linsenstrukturwalze 17 mit je 180° - Umschlingung weiter über eine dritte Walze (Balkenstrukturwalze 19), über die eine Rückseitenstruktur oder ein Flächenmuster auf die Rückseite des Films aufgebracht wird. Beide Gießer sind zweckmäßig gleich ausgebildet. Der Gießer 34, 35 besteht, wie in Figur 3 angedeutet, aus einer Wanne mit Lichtschutzeinrichtungen 79 aus Kunststoff-Folien-Material, insbesondere als Abdichtung zur Walze 17, 19.

Es wird mit geringen Spaltabständen gefahren, d.h. die Glattwalze 15 wird nur leicht gegen die Linsenstrukturwalze 17 angedrückt, das fotosensitive Harzmaterial, z.B. Fotoresist, wird über den Gießer der Dosiereinrichtung freigegeben und gelangt auf die Folie, wird davon mitgenommen und gelangt unter die Relief-Hohlräume der Umfangsstruktur der Walze 17 oder auch, wenn die Walze 19 als Strukturwalze ausgebildet ist, unter die Relief-Hohlräume der Walze 19. Nach vorbestimmtem Walzenumschlingungswinkel von ca. 130 - 170°, bezogen auf die 45°-Anordnung der Walzen 15 und 19 zur Walze 17, wird die Harzmaterialschicht mittels Strahlung durch die transparente Folie hindurch getrocknet. Es können mehrere Strahlungsquellen 22 vorhanden sein, um geringe Verweilzeiten im Strahlungsbereich zu erhalten, damit mit hohen Folien- bzw. Filmtransportgeschwindigkeiten gearbeitet werden kann.

Die Spalteinstelleinrichtungen 50 und 70 sowie die Achs-Parallelitäts-Einstell-Lagervorrichtung 90 sind Beispiele für eine technische Ausführung derartiger Einstellmittel im Bereich von ca. 1 bis ca. 2 µm. Es sind auch andere gleichwertige und gleich genaue Mittel für diese Zwecke verwendbar.

Es wird in dieser Anmeldung parallel von Film und Schicht gesprochen, das hat die folgende Bedeutung.

Unter einem Film soll immer eine Folie verstanden werden, die mindestens einseitig mit einer Schicht, im Sinne des obigen Auftragsverfahrens versehen ist.

Es ist aber auch grundsätzlich möglich, eine selbsttragende Schicht nach beschriebenem Verfahren mittels beschriebener Vorrichtung herzustellen und direkt mittels Strahlung zu härten und dann mittels der Walze 19 eine weitere Struktur- oder Flächenschicht aufzubringen.

Strahlung wird im Sinne vorliegender Erfindung durch alle elektromagnetischen Quellen erzeugt, sie schließt auch UV-Strahlung, IR-Strahlung und Korpuskular-Strahlung (z.B. Elektronenstrahlen) ein. Als Materialien zur Herstellung der Linsenstruktur- und der Balkenstruktur-Schicht sind Fotoresist-Materialien geeignet, die als Negativ- und Positiv-Resiste bekannt sind.

Diese Materialien unterscheiden sich funktionell dadurch, daß der Negativ-Resist an den belichteten Stellen aushärtet und der Positiv-Resist an den belichteten Stellen besser löslich, also auswaschbar wird.

Negativ arbeitende Fotoresists basieren im allgemeinen auf fotopolymerisierbaren Gemischen, die neben einem polymeren Bindemittel eine photopolymerisierbare Verbindung mit einem Fotoinitiator enthalten. Derartige Gemische enthalten z.B. partiell cyclisiertes Polyisopren als polymerisierbare Verbindung und eine Diazid-Verbindung als lichtempfindlichen difunktionellen Vernetzer (Photoinitiator). Es sind auch teilcyclisiertes Polybutadien als polymerisierbare Verbindung und Diazide (s.o.) bekannt.

Positiv arbeitende Fotoresists sind konventionelle Systeme aus einer fotounempfindlichen alkalilöslichen Matrix auf Basis von Novolaken und einer fotoempfindlichen Komponente, die als Löslichkeitsinhibitor wirkt und durch Belichtung in alkalilösliche Produkte umgewandelt wird, so daß die gesamten belichteten Bereiche in dem alkalischen Entwicklungslösungsmittel löslich werden.

Als Resiste für den kurzwelligen UV-Bereich sind auch z.B. Polymethyl-methacrylat, Copolymere aus Methylmethacrylat und Indenon sowie aus Methylmethacrylat und 3-Oximino-2-butanon als photoaktive Komponente bekannt. Ebenfalls sind auch Zweikomponentensysteme aus einer Polymethyl-methacrylat-co-methacrylsäure-Matrix und o-Nitrobenzylestern bekannt, z.B. Estern der Cholsäure, als Löslichkeitsinhibitoren.

Geeignete Fotoresist-Materialien können für den Zweck der Erfindung ggf. unter Verwendung geeigneter transparenter Klebe- oder Haftmittel ausgewählt und mit Vorteil verwendet werden.

Es sind auch andere geeignete Harzmaterialien mit geeigneten Fotoinitiatoren für die Zwecke der vorliegenden Erfindung verwendbar. Es ist dabei wichtig, daß der Härteprozeß relativ kurzzeitig verläuft und wenig oder kein Nacharbeiten, d.h. Entwickeln, Trocknen etc. noch notwendig ist.

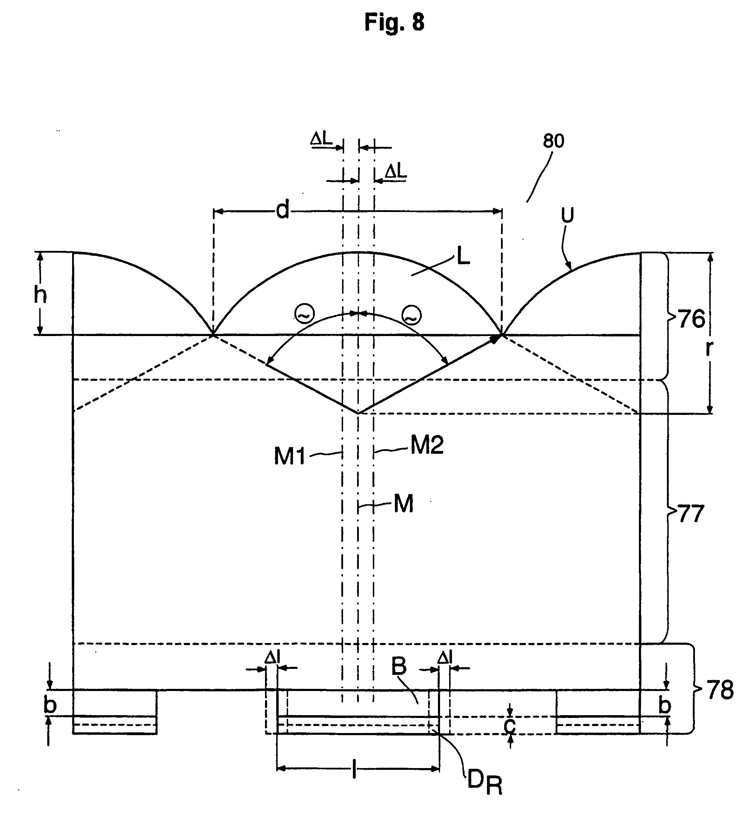

Ein mit dem oben beschriebenen Verfahren und der Vorrichtung hergestellter Anti-Kopierfilm wird im folgenden anhand der Darstellung in Figur 8 erläutert.

Ein Anti-Kopierfilm 80 besteht im Querschnitt (schematisch dargestellt) aus einer Linsenschicht 76, einer Basisfolie 77 und einer Balkenschicht 78. Die Linsenschicht 76 enthält erhaben ausgebildete Einzellinsen U, die z.B. eine Zylinder-Kalottenform (L) aufweisen. Die Balkenschicht enthält erhaben ausgebildete Balken B, die etwa Quaderform (im Querschnitt Rechteckform) aufweisen. Dazwischen ist die Basisfolie 77 vorgesehen, die als Träger für die Schichten 76 und 78 dient und die handelsüblich mit sehr gleichmäßiger Dicke ausgebildet ist und vorzugsweise aus Polyester, z.B. Polyethylenterephthalat (PETP) besteht. Die Dickentoleranzen handelsüblicher 100 µm-Folien liegen im Bereich von etwa ±1 µm. Grundsätzlich sind Folien mit einer Dicke von ca. 10 µm bis etwa 125 µm zweckmäßig verwendbar.

Die Linsenschicht 76 und die Balkenschicht 78 können als Präge- oder Gießschichten aus thermoplastischem und -härtbaren Materialien mit der jeweiligen Linsen-Kalotten- bzw. Quaderform-Struktur hergestellt werden. Wegen der notwendigen Registrierung jeder Linsen-Kalotte mit jedem Quaderform-Balken ist es günstiger, erst einmal die Linsen-Kalotten-Struktur und danach optisch durch die fertigen Linsen-Kalotten hindurch die Balken herzustellen (ähnlich wie in der EP-PS 655 032), am besten durch einen Härtungsprozeß mittels optischer Strahlung.

Es ist vorteilhaft, durch Verwendung gießfähiger Kunststoffe, die thermoplastisch und strahlenhärtbar sind, z.B. Fotoresiste wie Acrylatharz, mit durch UV-Licht härtenden Zusätzen und anschließendes Härten, z.B. mittels UV- oder Laser-Lichts, erst die Linsen-Kalotten-Struktur und in Zwangsregistrierung damit die Quaderform-Balkenstruktur mit denselben oder ähnlichen strahlungshärtenden Materialien herzustellen. Die Herstellung kann in Bahnen kontinuierlich erfolgen, also über entsprechend oberflächenstrukturierte Walzen mit extrem hoher Genauigkeit.

In Figur 8 ist die mittlere Linsen-Kalotte L mit einer Mittellinie M versehen und weist einen Öffnungswinkel 2 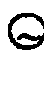 von etwa 60° auf. Die Basislänge ist mit d bezeichnet und wird durch die Anzahl der Linsen-Kalotten pro Längeneinheit, die von etwa 50 bis etwa 800 Linsen-Kalotten pro cm reichen kann und im Beispiel bei 100/cm liegt, bestimmt. Mit dem Winkel 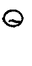 und der Länge d/₂ ergibt sich die Höhe h rechnerisch.

Die Balken B sind im Querschnitt von etwa Rechteckform und weisen eine Mindestdicke b von etwa 4 µm auf, ohne evtl. Druckschichten, und mit Druckschichten DR von vorzugsweise etwa 5 bis etwa 10 µm, die zweifach die Dicke c besitzen. Die Mittellinie M von Linsen-Kalotte L und Balken B symbolisiert die ideale Zuordnungslage zueinander, die jedoch praktisch nicht erreichbar ist. Deswegen sind rechts und links neben der Linie M die abweichenden Mittellinien M1 und M2 eingezeichnet, der Abstand zu M steht für die Symmetrie-Toleranz-Abweichung ΔL, wobei ΔL nur die Verschiebung des Balkens B mit der Balkenbreite 1 nach rechts oder links, wie gestrichelt gezeigt, bedeuten soll. Diese Symmetrie-Toleranz-Abweichung ΔL soll erfindungsgemäß höchstens etwa +15 %, insbesondere etwa ±3 bis etwa ±5 % der Balkenbreite 1 betragen, wenn die Eigenschaften des Anti-Kopierfilms noch erhalten bleiben sollen. Die Balkenbreite 1 soll grundsätzlich so gewählt werden, daß höchstens etwa 80 % der Fläche des nicht zu kopierenden Dokuments abgedeckt werden, damit die menschliche Lesbarkeit des Dokuments trotz des darauf angebrachten Anti-Kopierfilms noch sichergestellt ist.

Der beschriebene Anti-Kopierfilm ist für das Verhindern des Kopierens mittels Kopiereinrichtungen mit einem Öffnungswinkel im Bereich von etwa 20° bis etwa 50° ausgelegt, wobei der Öffnungswinkel der größte Öffnungswinkel des optischen Systems des jeweiligen Kopierers ist.

Kleine Öffnungswinkel, also mehr im Mittelbereich des Dokuments, sind nicht kritisch. Die größten Öffnungswinkel erfassen den Randbereich des Dokuments und sind deshalb auch kritisch im Sinne der Kopiersicherheit. Praktisch wurde ein Fotokopierer des Typs Ricoh FT 5535 mit einem maximalen Öffnungswinkel von ca. 44° für das Beispiel in Figur 8 zugrundegelegt.

In Figur 8 sind auf die Balkendicke b eine doppelte Druckschicht DR aufgebracht, da es sich als vorteilhaft herausgestellt hat, zwei dünnere Schichten nacheinander als eine dickere Schicht allein zu drucken.

Diese Druckschicht DR kann z.B. in der Druckstation 26 in Figur 2 aufgebracht werden.

Bei den Materialien der Schichten für die Linsen-Kalotten L und die Balken B handelt es sich um möglichst gut transparentes Material (auch nach dem Härten) wie auch bei der Basisfolie 77, um die optischen Eigenschaften des Films möglichst gut auszunutzen.

Die Basisfolie aus Polyester hat die Vorteile, optisch transparent, wirtschaftlich und dimensionsstabil zu sein. In Frage käme auch z.B. eine Polysulfon-Folie, besonders wegen ihres höheren Brechungsindexes als Polyester, aber sie ist unwirtschaftlich wegen ihrer weitaus höheren Kosten. Der größere Brechungsindex erlaubt eine kleinere Balkenbreite 1 bei unverändertem Öffnungswinkel oder einen größeren Öffnungswinkel des Kopierers bei unveränderter Balkenbreite 1.

Bei einer erhabenen Ausbildung der Balken B als Gießschicht ist, wie oben beschrieben, eine Mindestdicke von etwa 3 µm notwendig.

Es ist jedoch durchaus denkbar, die Walze 19 als Druckwalze auszubilden und Druckschichten von ca. 0,5 - 1 µm Dicke in Balkenform oder in sonstigen Formen, aber in fester, geometrischer und optischer Zuordnung zu einer Linsenschicht auf der anderen Seite des Films oder der Schicht auszubilden.

Derartige Flächengebilde sind bei 3D-Darstellungen und anderen optischen Kennzeichnungen, Sicherungskennzeichen usw. einsetzbar.

Falls als Lichtquellen aktinische Strahlungsquellen eingesetzt werden wie oben mehrfach erwähnt, ist es natürlich günstig, auch die Druckfarben und Klebmittel-Materialien entsprechend zu wählen, um dieselben Strahlungsquellen bei allen Auftrags- und Härte- oder Trocknungsprozessen einsetzen zu können um einen optimalen Produktionsfluß ohne große Verweilzeiten zu erhalten.

Der große Vorteil des beschriebenen 3-Walzen-Kontakt-Verfahrens und der Vorrichtung ist besonders, daß die Folie bzw. die Schicht in jedem Zeitpunkt der Beschichtung bzw. der Herstellung in Kontakt mit je einem Walzenpaar geführt ist.

Die beschriebene Erfindung betrifft vorteilhafte Verfahren und Vorrichtungen zum Herstellen eines transparenten Films oder einer transparenten Schicht mit einer wenigstens einerseitigen Oberflächenstruktur und einem dazu registergenauen anderseitigen strukturellen oder flächigen Muster, die mit wenigstens zwei drehenden Walzen arbeiten und Schichtauftrag dazwischen und Härten einer Strukturschicht. Durch eine dritte drehende Auftragswalze wird eine weitere Schicht auf die Rückseite der Strukturschicht registergenau auftragbar und härtbar. Die Walzen und Walzenspalte sind durch geeignete Vorrichtungen sehr genau einstellbar. Die Drehung aller Walzen wird durch einen Leitantrieb gesteuert.

## Patentansprüche

1. Verfahren zum Herstellen eines Films oder einer Schicht mit einer wenigstens einerseitigen Oberflächenstruktur auf einer Basisfolie (9) und einem dazu registergenauen anderseitigen strukturellen oder flächigen Muster, die über eine erste Walze (15) und eine mit einer Umfangsstruktur versehene zweite Walze (17) hergestellt sind, wobei die Walzen zur etwa gleich schnellen, aber gegensinnigen Drehung angetrieben werden, und der Film oder die Schicht durch Auftragen einer Schicht aus thermoplastischem Kunststoff auf eine über die erste Walze (15) der zweiten Walze (17) zugeführte Folie (9) hindurch hergestellt ist, **gekennzeichnet durch** eine der zweiten Walze (17) nachgeschaltete dritte Walze (19), die etwa gleichschnell und zur zweiten Walze (17) gegensinnig angetrieben wird und ebenfalls mit einem strukturellen oder flächigen Muster versehen ist, und **durch** Auftragen einer weiteren Schicht aus thermoplastischem, strahlungshärtbarem Kunststoff-Material auf die, der dritten Walze (19) über die zweite Walze (17) zugeführte andere Seite der Basisfolie (9), die wenigstens einseitig bereits beschichtet war, und **durch** Strahlungshärten der Kunststoffschicht an der außenliegenden, anderen Seite der Basisfolie (9).

2. Verfahren nach Anspruch 1, **gekennzeichnet durch** einen Film oder eine Schicht, die als einerseitige Oberflächenstruktur eine Vielzahl von gleichen, parallelliegenden, langgestreckten Linsenstrukturen (L), insbesondere von Zylinderkalottenform, besitzt und andererseits mit dazu registergenauen einander zugeordneten Parallellinien oder -nuten oder -stegen (B) versehen ist.

3. Verfahren nach Anspruch 1, **gekennzeichnet durch** einen Film oder eine Schicht, die als Oberflächenstruktur eine Vielzahl von parallelliegenden Bogenform-Linsen aufweist.

4. Verfahren nach Anspruch 1 oder 2, **gekennzeichnet durch** einen Film oder eine Schicht, die als anderseitige Oberflächenstruktur, eine Vielzahl von parallelliegenden Stegen (B), insbesondere von Rechteckform, aufweist.

5. Verfahren nach Anspruch 2, **dadurch gekennzeichnet, daß** die einerseitige Linsenstruktur (L) und die anderseitige Parallel-Linien, -Nuten- oder -Stege zeitlich nacheinander, insbesondere unmittelbar nacheinander, und registergenau zueinander hergestellt werden.

6. Verfahren nach Anspruch 2 oder 4, **dadurch gekennzeichnet, daß** die Linsen (L) und Stege (B) aus einem UV-härtbarem Kunststoff, insbesondere einem Acrylatharz, bestehen.

7. Verfahren nach Anspruch 6, **dadurch gekennzeichnet, daß** der Kunststoff, insbesondere das Acrylatharz, bis zu 30 Gew.-% Pigmente zur Herabsetzung der Transparenz enthält.

8. Verfahren nach Anspruch 1 und 4, **dadurch gekennzeichnet, daß** die Stege (B) mit optisch deckenden Schichten versehen, insbesondere bedruckt, werden.

9. Verfahren nach Anspruch 8, **dadurch gekennzeichnet, daß** wenigstens zwei, vorzugsweise acht, optisch deckende Schichten auf die Stege gedruckt werden.

10. Verfahren nach einem oder mehreren oder Ansprüche 6 bis 9, **dadurch gekennzeichnet, daß** die maximale Transparenz der Stege (B) etwa 7 % beträgt.

11. Verfahren nach Anspruch 1 und 4, **dadurch gekennzeichnet, daß** die Breite der Stege (B) so gewählt ist, daß dieselben höchstens etwa 80 % der Fläche des Films oder der Schicht bedecken und undurchsichtig machen.

12. Vorrichtung zum Herstellen eines Films oder einer Schicht mit einer wenigstens einerseitigen Oberflächenstruktur auf einer Basisfolie (9) und einem dazu registergenauen, anderseitigen strukturellen oder flächigen Muster mittels einer ersten Walze (15) und einer mit einer Umfangstruktur versehenen zweiten Walze (17), die zur etwa gleich schnellen, aber gegensinnigen Drehung angetrieben sind, und mittels einer Auftragseinrichtung (34, 35) für eine Schicht aus thermoplastischem Kunststoff auf die über die erste Walze (15) der zweiten Walze (17) zugeführte Basisfolie (9) und mittels einer Strahlungsquelle (22) zur Härten der am Umfang der zweiten Walze (17) anliegenden Kunststoffschicht durch die Folie (9) hindurch, **dadurch gekennzeichnet, daß** der zweiten Walze (17) eine dritte Walze (19) nachgeschaltet ist, die auch etwa gleich schnell und zur zweiten Walze (17) gegensinnig angetrieben ist und ebenfalls mit einem strukturellen oder flächigen Muster versehen ist, und mittels einer Auftragseinrichtung (34, 35) für eine weitere Schicht aus thermoplastischem, strahlungshärtbarem Kunststoff-Material auf die, der dritten Walze (19) über die zweite Walze (17) zugeführte andere Seite der Folie (9), die wenigstens einerseitig bereits beschichtet war, und mittels einer Strahlungsquelle (22) zum Härten der Kunststoffschicht an der außenliegenden anderen Seite der Basisfolie (9).

13. Vorrichtung nach Anspruch 12, **dadurch gekennzeichnet, daß** die zweite Walze (17) eine Oberflächenstruktur mit einer Vielzahl von gleichen, parallelliegenden Bogenform-Nuten aufweist.

14. Vorrichtung nach Anspruch 12 oder 13, **dadurch gekennzeichnet, daß** die erste Walze (15) eine glatte Oberfläche besitzt.

15. Vorrichtung nach Anspruch 12 oder 13 bis 14, **dadurch gekennzeichnet, daß** die dritte Walze (19) als Oberflächenstruktur eine Vielzahl von parallelliegenden Nuten, insbesondere von Rechteckform, aufweist.

16. Vorrichtung nach Anspruch 14, **gekennzeichnet durch** eine Kontaktwalze (14) an der ersten Walze (15), über die die Trägerfolie (9) für die Herstellung eines Films oder einer Schicht dem Umfang der ersten Walze (15) zugeführt wird.

17. Vorrichtung nach Anspruch 12 und einem oder mehreren der Ansprüche 13 bis 16, **dadurch gekennzeichnet, daß** die erste Walze (15) als Leitantriebswalze für die Steuerung der Drehgeschwindigkeit der zweiten und dritten Walze (17 u. 19) dient.

18. Vorrichtung nach einem oder mehreren der Ansprüche 12 bis 17, **dadurch gekennzeichnet, daß** die zweite Walze (17) mittels einer Verstellvorrichtung (50, 70), insbesondere einer Exzenter-Verstellvorrichtung, gegenüber der ersten und dritten Walze (15 bzw. 19) axial verstellbar ausgebildet ist.

19. Vorrichtung nach Anspruch 18, **dadurch gekennzeichnet, daß** die Verstellvorrichtung im wesentlichen aus einem mit der axial verstellbaren Walze verbundenen Druckelement (43) besteht, mit dem eine Exzenterwelle (37, 38) in Kontakt steht.

20. Vorrichtung nach Anspruch 12 und einem oder mehreren der Ansprüche 13 bis 19, **dadurch gekennzeichnet, daß** die nicht jeweils axial verstellbaren Walzen (15, 19) mittels einer Abschwenk- oder Abziehvorrichtung gelagert sind zur Einfädelung der Trägerfolie (9).

21. Vorrichtung nach Anspruch 12 und einem oder mehreren der Ansprüche 13 bis 20, **dadurch gekennzeichnet, daß** die Auftragseinrichtung ein Gießer (34, 35) mit wenigstens einer Dosiereinrichtung ist, und eine Abhebevorrichtung zur Einfädelung der Trägerfolie (9) vorgesehen ist.

22. Vorrichtung nach Anspruch 20, **dadurch gekennzeichnet, daß** der Schwenkmechanismus aus einer Exzenterlagerung besteht.

23. Vorrichtung nach Anspruch 12 und einem oder mehreren der Ansprüche 13 bis 22, **gekennzeichnet durch** Lagermittel (90), in denen zwei der ersten bis dritten Walzen (15, 17, 19) gegenüber der anderen Walze in ihrer Achs-Parallelität zur jeweils anderen Walze einstellbar sind.

24. Vorrichtung nach Anspruch 12 und einem oder mehreren der Ansprüche 13 bis 23, **dadurch gekennzeichnet, daß** zum Antrieb jeder der drei Walzen (15, 17, 19) ein Antriebs-Motor (15 A, 17 A, 19 A) mit einem dazwischengeschalteten Getriebe und einer elektronischen Gleichlaufregelung vorgesehen ist.

25. Vorrichtung nach Anspruch 12 und einem oder mehreren der Ansprüche 13 bis 24, **dadurch gekennzeichnet, daß** die Auftragseinrichtung ein Vorhanggießer (34, 35) ist, der ein Gehäuse mit Lichtschutzeinrichtungen (79) besitzt, wobei letztere (79) Elemente aus Polytetrafluorethylene enthalten.

26. Vorrichtung nach Anspruch 25, **dadurch gekennzeichnet, daß** die Auftragseinrichtung aus Feindosierelementen besteht.

27. Vorrichtung nach Anspruch 12 und einem oder mehreren der Ansprüche 13 bis 25, **dadurch gekennzeichnet, daß** eine Spalteinstellungseinrichtung (50, 70) für den ersten Spalt (16) zwischen der ersten Walze (15) und der zweiten Walze (17) sowie eine weitere Spalteinstellungseinrichtung (50, 70) für den zweiten Spalte (18) zwischen der zweiten und dritten Walze (17 u. 19) vorgesehen sind.

28. Vorrichtung nach Anspruch 12 und einem oder mehreren der Ansprüche 13 bis 26, **dadurch gekennzeichnet, daß** eine Abwickelstation (5) für die Trägerfolie (9) mit Tänzerwalzensteuerung (8) vor der Herstellvorrichtung (11) des Films oder der Schicht (25) vorgesehen ist.

29. Vorrichtung nach Anspruch 27, **dadurch gekennzeichnet, daß** in Laufrichtung des Films oder der Schicht (25) hinter der Herstellvorrichtung (11) des Films oder der Schicht (25) eine weitere Antriebsstation (23) mit Tänzerwalzensteuerung (8) vorgesehen ist.

30. Vorrichtung nach Anspruch 27 und 28, **dadurch gekennzeichnet, daß** in Laufrichtung des Films oder der Schicht (25) hinter der weiteren Antriebsstation (23) eine Druckstation (26) zum Bedrucken der Stege (B) auf der anderen Seite des Films oder der Schicht (25) vorgesehen ist.

31. Vorrichtung nach Anspruch 27 und 28, **dadurch gekennzeichnet, daß** in Laufrichtung hinter der Druckstation (26) eine Station (28) zum Aufbringen eines Klebmittels auf den Film oder die Schicht (25) vorgesehen ist.

32. Vorrichtung nach Anspruch 27, 28 und 31, **dadurch gekennzeichnet, daß** in Laufrichtung hinter der Klebestation (28) eine Kaschierstation (29) zum Aufkaschieren eines Abdeckfilms auf die Klebschicht des Films oder der Schicht (25) angeordnet ist.

33. Vorrichtung nach Anspruch 30 oder 31 oder 32, **dadurch gekennzeichnet, daß** hinter der Druckstation (26) oder Klebestation (28) oder Kaschierstation (29) die Aufwickelstation (20) für den Film- oder die Schicht (25) vorgesehen ist.

## Claims

1. A method of producing a film or a layer with a surface structure at least on one side of a base film (9) and, on the other side, in register with said surface structure, a structural or two-dimensional pattern, which are produced by means of a first roller (15) and a second roller (17), provided with a circumferential structure, the rollers being driven in approximately equally fast, but opposite rotation, and the film or the layer being produced by applying a layer of thermoplastic polymer to a film (9) fed to the second roller (17) via the first roller (15), in which method there is a third roller (19), which is arranged downstream of the second roller (17), is driven approximately equally fast and in the opposite direction to the second roller (17) and is likewise provided with a structural or 2-dimensional pattern, and in which method a further layer of thermoplastic, radiation-curable polymer material is applied to the other side of the base film (9), which has been fed to the third roller (19) via the second roller (17) and was already coated at least on one side, and in which method the polymer layer on the outer, other side of the base film (9) is radiation cured.

2. A method as claimed in claim 1, in which there is a film or a layer which has as a surface structure on one side a multiplicity of identical, parallel, elongate lenticular structures (L), in particular of cylindrically arched form, and is provided on the other side with mutually assigned parallel lines or grooves or ridges (B) in register with said structures.

3. A method as claimed in claim 1, in which there is a film or a layer which has as a surface structure a multiplicity of parallel arcuate lenses.

4. A method as claimed in claim 1 or 2, in which there is a film or a layer which has as the surface structure on the other side a multiplicity of parallel ridges (B), in particular of rectangular form.

5. A method as claimed in claim 2, wherein the lenticular structure (L) on one side and the parallel lines, grooves or ridges on the other side are produced after each other in time, in particular immediately after each other, and in register with each other.

6. A method as claimed in claim 2 or 4, wherein the lenses (L) and ridges (B) consist of a UV-curable polymer, in particular an acrylic resin.

7. A method as claimed in claim 6, wherein the polymer, in particular the acrylic resin, contains up to 30% by weight of pigments for reducing transparency.

8. A method as claimed in claims 1 and 4, wherein the ridges (B) are provided with optically opacifying layers, in particular said layers are printed on.

9. A method as claimed in claim 8, wherein the at least two, preferably eight, optically opacifying layers are printed onto the ridges.

10. A method as claimed in one or more of claims 6 to 9, wherein the maximum transparency of the ridges (B) is about 7%.

11. A method as claimed in claims 1 and 4, wherein the width of the ridges (B) is chosen such that the same cover and render opaque at most about 80% of the surface area of the film or of the layer.

12. Apparatus for producing a film or a layer with a surface structure at least on one side of a base film (9) and, on the other side, in register with said surface structure, a structural or 2-dimensional pattern, by means of a first roller (15) and a second roller (17), provided with a circumferential structure, which rollers are driven in approximately equally fast, but opposite rotation, and by means of an application device (34, 35) for a layer of thermoplastic polymer to be applied to the base film (9) fed to the second roller (17) via the first roller (15) and by means of a radiation source (22) for curing through the film (9) the polymer layer bearing against the circumference of the second roller (17), wherein the second roller (17) is followed downstream by a third roller (19), which is also driven approximately equally fast and in the opposite direction to the second roller (17) and is likewise provided with a structural or 2-dimensional pattern, and by means of an application device (34, 35) for a further layer of thermoplastic, radiation-curable polymer material to be applied to the other side of the film (9), which has been fed to the third roller (19) via the second roller (17) and was already coated at least on one side, and by means of a radiation source (22) for curing the polymer layer on the outer other side of the base film (9).

13. Apparatus as claimed in claim 12, wherein the second roller (17) has a surface structure with a multiplicity of identical, parallel arcuate grooves.

14. Apparatus as claimed in claim 12 or 13, wherein the first roller (15) has a smooth surface.

15. Apparatus as claimed in claim 12 or 13 or 14, wherein the third roller (19) has as a surface structure a multiplicity of parallel grooves, in particular of rectangular form.

16. Apparatus as claimed in claim 14, in which there is at the first roller (15) a contact roller (14), by means of which the base film (9) for the production of a film or a layer is fed to the circumference of the first roller (15).

17. Apparatus as claimed in claim 12 and one or more of claims 13 to 16, wherein the first roller (15) serves as a master drive roller for controlling the rotational speed of the second and third rollers (17 and 19).

18. Apparatus as claimed in one or more of claims 12 to 17, wherein the second roller (17) is designed to be axially adjustable by means of an adjusting device (50, 70), in particular an eccentric adjusting device, with respect to the first and third rollers (15 and 19).

19. Apparatus as claimed in claim 18, wherein the adjusting device substantially comprises a thrust element (43) which is connected to the axially adjustable roller and with which an eccentric shaft (37, 38) is in contact.

20. Apparatus as claimed in claim 12 and one or more of claims 13 to 19, wherein the not respectively axially adjustable rollers (15, 19) are mounted by means of a swivelling away or drawing away device for threading in the base film (9).

21. Apparatus as claimed in claim 12 and one or more of claims 13 to 20, wherein the application device is a coater (34, 35) with at least one metering device, and a lifting-off device is provided for threading in the carrier film (9).

22. Apparatus as claimed in claim 20, wherein the swivelling mechanism comprises an eccentric mounting.

23. Apparatus as claimed in claim 12 and one or more of claims 13 to 22, in which there are bearing means (90), in which two of the first to third rollers (15, 17, 19) can be set with respect to the other roller in their axial parallelism to the respectively other roller.

24. Apparatus as claimed in claim 12 and one or more of claims 13 to 23, wherein, for driving each of the three rollers (15, 17, 19), there is provided a drive motor (15 A, 17 A, 19 A) with an interposed gear transmission and an electronic synchronism control.

25. Apparatus as claimed in claim 12 and one or more of claims 13 to 24, wherein the application device is a curtain coater (34, 35) which has a housing with light shielding devices (79), the latter (79) including elements made of polytetrafluoroethylene.

26. Apparatus as claimed in claim 25, wherein the application device comprises fine-metering elements.

27. Apparatus as claimed in claim 12 and one or more of claims 13 to 25, wherein a nip setting device (50, 70) for the first nip (16) between the first roller (15) and the second roller (17) and a further nip setting device (50, 70) for the second nip (18) between the second and third rollers (17 and 19) are provided.

28. Apparatus as claimed in claim 12 and one or more of claims 13 to 26, wherein an unwinding station (5) for the base film (9) with compensating roller control (8) is provided upstream of the production device (11) of the film or the layer (25).

29. Apparatus as claimed in claim 27, wherein a further drive station (23) with compensating roller control (8) is provided downstream of the production device (11) of the film or the layer (25) in the running direction of the film or the layer (25).

30. Apparatus as claimed in claims 27 and 28, wherein a printing station (26) for printing onto the ridges (B) on the other side of the film or the layer (25) is provided downstream of the further drive station (23) in the running direction of the film or the layer (25).

31. Apparatus as claimed in claims 27 and 28, wherein a station (28) for applying an adhesive to the film or the layer (25) is provided downstream of the printing station (26) in the running direction.

32. Apparatus as claimed in claims 27, 28 and 31, wherein a laminating station (29) for laminating a screening film onto the adhesive layer of the film or the layer (25) is arranged downstream of the adhering station (28) in the running direction.

33. Apparatus as claimed in claim 30 or 31 or 32, wherein the winding-up station (20) for the film or the layer (25) is provided downstream of the printing station (26) or adhering station (28) or laminating station (29).

## Revendications

1. Procédé pour former un film ou une couche avec une structure superficielle sur au moins une face sur une feuille de base (9) et avec un motif structuré ou plat sur l'autre face exactement repéré avec celle-ci, qui sont réalisés par un premier cylindre (15) et un deuxième cylindre (17) pourvu d'une structure périphérique, dans lequel les cylindres sont entraînés en rotation à une vitesse sensiblement égale mais en sens contraire, et le film ou la couche est formé(e) par dépôt d'une couche de matière plastique thermoplastique sur une feuille (9) amenée au deuxième cylindre (17) par le premier cylindre (15), **caractérisé par** un troisième cylindre (19) succédant au deuxième cylindre (17), qui est entraîné sensiblement à la même vitesse mais en sens contraire du deuxième cylindre (17) et qui est également pourvu d'un motif structuré ou plat, et par le dépôt d'une couche supplémentaire de matière plastique thermoplastique, durcissable par irradiation, sur l'autre face de la feuille de base (9) arrivant sur le troisième cylindre (19) par le deuxième cylindre (17), qui avait déjà été revêtue au moins sur une face, et par le durcissement par irradiation de la couche de matière plastique sur l'autre face, disposée à l'extérieur, de la feuille de base (9).

2. Procédé suivant la revendication 1, **caractérisé par** un film ou une couche, qui possède comme structure superficielle sur une face une pluralité de structures lenticulaires (L) allongées, parallèles et identiques, en particulier en forme de calotte cylindrique, et est pourvu(e) sur l'autre face de lignes ou de rainures ou de nervures (B) disposées parallèlement les unes aux autres et exactement repérées avec ces structures.

3. Procédé suivant la revendication 1, **caractérisé par** un film ou une couche, qui présente comme structure superficielle une pluralité de lentilles en forme d'arc disposées parallèlement.

4. Procédé suivant la revendication 1 ou 2, **caractérisé par** un film ou une couche, qui présente comme structure superficielle sur l'autre face une pluralité de nervures (B) parallèles, en particulier de forme rectangulaire.

5. Procédé suivant la revendication 2, **caractérisé en ce que** la structure lenticulaire (L) sur une face et les lignes, rainures ou nervures parallèles sur l'autre face sont formées l'une après l'autre dans le temps, en particulier immédiatement l'une après l'autre, et en repérage exact l'une par rapport à l'autre.

6. Procédé suivant la revendication 2 ou 4, **caractérisé en ce que** les lentilles (L) et les nervures (B) sont constituées d'une matière plastique durcissable aux UV, en particulier d'une résine acrylate.

7. Procédé suivant la revendication 6, **caractérisé en ce que** la matière plastique, en particulier la résine acrylate, contient jusqu'à 30 % en poids de pigments en vue de réduire sa transparence.

8. Procédé suivant la revendication 1 et 4, **caractérisé en ce que** les nervures (B) sont pourvues, en particulier par impression, de couches visuellement couvrantes.

9. Procédé suivant la revendication 8, **caractérisé en ce qu'**au moins deux, de préférence huit, couches visuellement couvrantes sont imprimées sur les nervures.

10. Procédé suivant une ou plusieurs des revendications 6 à 9, **caractérisé en ce que** la transparence maximale des nervures (B) atteint environ 7 %.

11. Procédé suivant la revendication 1 et 4, **caractérisé en ce que** la largeur des nervures (B) est choisie de telle manière que celles-ci couvrent et rendent opaques au maximum environ 80 % de la surface du film ou de la couche.

12. Dispositif pour former un film ou une couche avec une structure superficielle sur au moins une face sur une feuille de base (9) et avec un motif structuré ou plat sur l'autre face exactement repéré avec celle-ci, au moyen d'un premier cylindre (15) et d'un deuxième cylindre (17) pourvu d'une structure périphérique, qui sont entraînés en rotation à une vitesse sensiblement égale mais en sens contraire, et au moyen d'un dispositif d'enduction (34, 35) pour une couche en une matière plastique thermoplastique sur la feuille de base (9) amenée au deuxième cylindre (17) par le premier cylindre (15) et au moyen d'une source de radiations (22) pour le durcissement de la couche de matière plastique appliquée sur la périphérie du deuxième cylindre (17) à travers la feuille (9), **caractérisé en ce qu'**au deuxième cylindre (17) succède un troisième cylindre (19) qui est également entraîné sensiblement à la même vitesse mais en sens contraire du deuxième cylindre (17) et qui est également pourvu d'un motif structuré ou plat, et au moyen d'un dispositif d'enduction (34, 35) pour une couche supplémentaire en matière plastique thermoplastique, durcissable par irradiation, sur l'autre face de la feuille (9) arrivant au troisième cylindre (19) par le deuxième cylindre (17), qui avait déjà été revêtue au moins sur une face, et au moyen d'une source de radiations (22) pour le durcissement de la couche de matière plastique sur l'autre face disposée à l'extérieur de la feuille de base (9).

13. Dispositif suivant la revendication 12, **caractérisé en ce que** le deuxième cylindre (17) présente une structure superficielle avec une pluralité de rainures en forme d'arc, identiques et disposées parallèlement.

14. Dispositif suivant la revendication 12 ou 13, **caractérisé en ce que** le premier cylindre (15) possède une surface lisse.

15. Dispositif suivant la revendication 12 ou 13 à 14, **caractérisé en ce que** le troisième cylindre (19) présente, comme structure superficielle, une pluralité de rainures parallèles, en particulier de forme rectangulaire.

16. Dispositif suivant la revendication 14, **caractérisé par** un cylindre de contact (14) sur le premier cylindre (15), par lequel la feuille de support (9) est amenée sur la périphérie du premier cylindre (15) pour la formation d'un film ou d'une couche.

17. Dispositif suivant la revendication 12 et une ou plusieurs des revendications 13 à 16, **caractérisé en ce que** le premier cylindre (15) sert de cylindre moteur directeur pour la commande de la vitesse de rotation du deuxième et du troisième cylindres (17 et 19).

18. Dispositif suivant une ou plusieurs des revendications 12 à 17, **caractérisé en ce que** le deuxième cylindre (17) est réglable en direction axiale par rapport au premier et au troisième cylindres (15 respectivement 19) au moyen d'un dispositif de réglage (50, 70), en particulier un dispositif de réglage à excentrique.

19. Dispositif suivant la revendication 18, **caractérisé en ce que** le dispositif de réglage se compose essentiellement d'un élément de poussée (43) relié au cylindre réglable en direction axiale, avec lequel un arbre d'excentrique (37, 38) est en contact.

20. Dispositif suivant la revendication 12 et une ou plusieurs des revendications 13 à 19, **caractérisé en ce que** les cylindres (15, 19) respectivement non réglables en direction axiale sont supportés par un dispositif basculant ou rétractable pour l'enfilage de la feuille de support (9).

21. Dispositif suivant la revendication 12 et une ou plusieurs des revendications 13 à 20, **caractérisé en ce que** le dispositif d'enduction est un verseur (34, 35) avec au moins un dispositif de dosage, et **en ce qu'**il est prévu un dispositif de soulèvement pour l'enfilage de la feuille de support (9).

22. Dispositif suivant la revendication 20, **caractérisé en ce que** le mécanisme de basculement se compose d'un palier à excentrique.

23. Dispositif suivant la revendication 12 et une ou plusieurs des revendications 13 à 22, **caractérisé par** des moyens d'appui (90), dans lesquels deux des premier à troisième cylindres (15, 17, 19) sont réglables en ce qui concerne le parallélisme des axes chaque fois à l'égard de l'autre cylindre, par rapport à l'autre cylindre.

24. Dispositif suivant la revendication 12 et une ou plusieurs des revendications 13 à 23, **caractérisé en ce qu'**il est prévu, pour l'entraînement de chacun des trois cylindres (15, 17, 19), un moteur d'entraînement (15A, 17A, 19A) avec un train d'engrenages intermédiaire et une commande électronique de synchronisation.

25. Dispositif suivant la revendication 12 et une ou plusieurs des revendications 13 à 24, **caractérisé en ce que** le dispositif d'enduction est un verseur en rideau (34, 35), qui présente une enceinte avec des dispositifs de protection contre la lumière (79), dans lequel ces derniers (79) comportent des éléments en polytétrafluoroéthylène.

26. Dispositif suivant la revendication 25, **caractérisé en ce que** le dispositif d'enduction se compose d'éléments de dosage fin.

27. Dispositif suivant la revendication 12 et une ou plusieurs des revendications 13 à 25, **caractérisé en ce qu'**il est prévu un dispositif de réglage de fente (50, 70) pour la première fente (16) entre le premier cylindre (15) et le deuxième cylindre (17) ainsi qu'un autre dispositif de réglage de fente (50, 70) pour la deuxième fente (18) entre les deuxième et troisième cylindres (17 et 19).

28. Dispositif suivant la revendication 12 et une ou plusieurs des revendications 13 à 26, **caractérisé en ce qu'**il est prévu, avant le dispositif (11) de formation du film ou de la couche (25), une station de débobinage (5) pour la feuille de support (9) avec une commande à cylindres flottants (8).

29. Dispositif suivant la revendication 27, **caractérisé en ce qu'**il est prévu, après le dispositif (11) de formation du film ou de la couche (25) dans le sens de défilement du film ou de la couche (25), une autre station d'entraînement (23) avec une commande à cylindres flottants (8).

30. Dispositif suivant la revendication 27 et 28, **caractérisé en ce qu'**il est prévu, après l'autre station d'entraînement (23) dans le sens de défilement du film ou de la couche (25), une station d'impression (26) pour l'impression des nervures (B) sur l'autre face du film Ou de la couche (25 .

31. Dispositif suivant la revendication 27 et 28, **caractérisé en ce qu'**il est prévu, après la station d'impression (26) dans le sens de défilement, une station (28) pour l'application d'un adhésif sur le film ou sur la couche (25).

32. Dispositif suivant la revendication 27, 28 et 31, **caractérisé en ce qu'**une station de masquage (29) pour appliquer un film de masquage sur la couche adhésive du film ou de la couche (25) est disposée après la station de collage (28) dans le sens de défilement.

33. Dispositif suivant la revendication 30 ou 31 ou 32, **caractérisé en ce que** la station de bobinage (20) pour le film ou la couche (25) est prévue après la station d'impression (26) ou la station de collage (28) ou la station de masquage (29).
